# EUROPÄISCHE PATENTSCHRIFT

(11) **EP 3 552 756 B1**
(45) Veröffentlichungstag und Bekanntmachung des Hinweises auf die Patenterteilung: **23.09.2020**
(21) Anmeldenummer: 18167235.3
(22) Anmeldetag: 13.04.2018
(51) Int. Cl.: B23P 15/02, F01D 5/18, B22D 29/00, B22C 9/04

(54) **VERFAHREN ZUR HERSTELLUNG EINES METALLBAUTEILS MIT MINDESTENS EINER AUSSPARUNG**
METHOD FOR PRODUCING A METALLIC WORKPIECE WITH AT LEAST ONE CAVITY
PROCÉDÉ DE FABRICATION D'UN COMPOSANT MÉTALLIQUE À AU MOINS UN ÉVIDEMENT

(43) Veröffentlichungstag der Anmeldung: 16.10.2019
(73) Patentinhaber: Hermle Maschinenbau GmbH, 85521 Ottobrunn (DE)
(72) Erfinder: Derntl, Rudolf, 4222 Langenstein (AT); Schäfer, Konrad, 80939 München (DE); Scholz, Peter, 93055 Regensburg (DE)
(74) Vertreter: Hoefer & Partner Patentanwälte mbB

(56) Entgegenhaltungen:
- EP-A1- 0 968 317
- EP-A2- 0 951 579
- Mohammad Momeni: "Physical & Chemical Processes during Sintering of Ferrous PM Compacts", 4. November 2012 (2012-11-04), LAP LAMBERT Academic Publishing, XP002782933, ISBN: 978-3-659-27100-7 Seite 71, * Seite 71; Punkt 2.3; Abbildungen 2-10A *
- Hironori SUZUKI, Satoshi NISHIDA, Takayasu FUJIURA: "Newly Developed Iron-based Powder Mixture, Highdensity SEGLESS, for High Density Compaction", KOBELCO TECHNOLOGY REVIEW, 30. Dezember 2011 (2011-12-30), Seiten 24-29, XP002782944, Gefunden im Internet: URL:https://pdfs.semanticscholar.org/d1f1/ 397eeca4a0767edb31c54611d04dfb3a667d.pdf [gefunden am 2018-07-11]

## Beschreibung

Die Erfindung betrifft ein Verfahren zur Herstellung eines Metallbauteils mit mindestens einer Aussparung, wobei die Aussparung durch das Verfahren sehr ökonomisch und effizient freigelegt wird.

Werkstücke mit Aussparungen, wie z.B. Kavitäten, Ausnehmungen, Hinterschneidungen, Hohlräume und dergleichen können nicht nur durch spanabhebende Verfahren, sondern auch durch regenerative Verfahren hergestellt werden. Bei Anwendung eines regenerativen Verfahrens wird der Bereich des Werkstücks, der später nach Fertigstellung des Werkstücks die Aussparung darstellen soll, mit einem Trägermaterial, auch Stützstruktur genannt, versehen, die während des Aufbaus des Werkstücks die künftige Aussparung mindestens teilweise ausfüllt. Nach Beendigung des Aufbaus des Werkstücks wird das Trägermaterial entfernt. Hierzu lehren z.B. WO 2008/125352 A1 und DE 19716524 A1, dass das Trägermaterial aus der Aussparung herausgelöst werden kann. In diesen Verfahren kann ein wässriges Medium, beispielsweise mit einem sauren pH-Wert, verwendet werden. Derartige Verfahren zum Freilegen einer Aussparung sind jedoch aufwendig im Hinblick auf den Raumbedarf sowie die Reaktionszeit. Auch dürfen die Werkstücke keinerlei Reaktion mit dem anzuwendenden Medium eingehen. Nachteilig hierbei sind insbesondere saure Medien, die eine Korrosion der metallischen Werkstücke bewirken können.

EP 0951579 A2 beschreibt ein Verfahren zur Herstellung von hohlen Objekten, das die Schritte umfasst: Herstellen eines Legierungs-Unterbaus, um eine erforderliche strukturelle Festigkeit zu schaffen, wobei der Unterbau Hohlräume umfasst, die den inneren Dimensionen des fertigen Objekts entsprechen sollen; Füllen der Hohlräume mit einem Füllmaterial und Durchführen einer Wärmebehandlung.

EP 0968317 A1 offenbart ein Verfahren zur Herstellung von Kanälen innerhalb eines Gegenstands, wobei das Verfahren die folgenden Schritte umfasst:
- Bereitstellen eines Substrats mit einer Substratoberfläche mit einer Vielzahl von Nuten;
- Füllen von mindestens einem Abschnitt von mindestens einer der Nuten mit einem Füllstoff, wobei der Füllstoff eine Oberfläche aufweist;
- Bilden einer Haut auf der Füllstoffoberfläche; und
- Entfernen des Füllstoffs aus mindestens einer der Nuten, wobei die Haut im Wesentlichen unbeschädigt bleibt, wodurch mindestens ein Kanal innerhalb des Substrats gebildet wird, so daß dadurch ein Kühlmedium strömen kann, um Wärme aus dem Substrat und der Haut zu entfernen, dadurch gekennzeichnet, daß der Schritt des Bildens einer Haut selbst die folgenden Schritte umfasst:
   - Bilden eines Dampfes aus einem Bedampfungsmittel; und
   - Aufkondensieren des Dampfes auf die Substratoberfläche und die Füllstoffoberfläche.

Hironori SUZUKI, Satoshi NISHIDA, Takayasu FUJIURA: "Newly Developed Iron-based Poweder Mixture, Highdensity SEGLESS, for High Density Compaction", KOBELCO TECHNOLOGY REVIEW, Seiten 24-29 (2011-12-30) offenbart einen Entwachsungsprozess. Als beispielhaftes Gleitmittel wird KPA (ein Polyhydroxyamid) offenbart, das zum Test der Entwachsung mit Eisenpulver vermengt wird. Ein Verfahren zur Herstellung eines Metallbauteils mit einer Aussparung wird nicht offenbart, auch wenn durch das Einbringen und anschließende Entfernen des KPA Hohlräume im (gesinterten) Eisen zurückbleiben.

Es ist daher eine Aufgabe der Erfindung, ein Verfahren zur Herstellung eines Metallbauteils mit mindestens einer Aussparung anzugeben, das einfach, ohne hohen technischen Aufwand, mit hoher Effizienz durchgeführt werden kann, ohne dass das Metallbauteil dabei Schaden nimmt.

Die Lösung dieser Aufgabe erfolgt durch die Merkmale des unabhängigen Anspruchs. Die abhängigen Ansprüche haben vorteilhafte Ausführungsformen und Weiterbildungen der Erfindung zum Inhalt.

Somit wird ein Verfahren zur Herstellung eines Metallbauteils mit mindestens einer Aussparung bereitgestellt, das nachfolgende Schritte umfasst:
Zunächst wird ein Metallbauteil in eine Heizvorrichtung eingebracht. Das Metallbauteil kann auf herkömmliche Weise, beispielsweise durch einen Spritzprozess, wie z.B. Kaltgasspritzen, hergestellt sein und umfasst mindestens ein eine Aussparung zumindest teilweise füllendes Trägermaterial. Unter einer Aussparung wird im Sinne der vorliegenden Erfindung jegliche Art von Hohlraum, also Kavitäten, Ausnehmungen, Hinterschneidungen, Kanäle und dergleichen, verstanden, die bewusst in dem Metallbauteil vorgesehen werden. Nicht umfasst sind hierbei Poren des Metallbauteils selber. Die im Metallbauteil vorgesehene Aussparung kann nach Fertigstellung des Metallbauteils beispielsweise einen Kühlkanal, also allgemein einen ein Medium führenden Kanal darstellen, und z.B. zum Transport von Reaktionsedukten, Reaktionsprodukten, Kühlmedien, umfassend Gase und Flüssigkeiten, oder anderweitigen Medien, wie z.B. Hydrauliköle und dergleichen, vorgesehen sein. Die Aussparung kann auf herkömmliche Art und Weise in dem Metallbauteil gebildet sein. Ferner können auch mehrere Aussparungen vorgesehen sein, die ähnlich ausgebildet oder aber von unterschiedlicher Gestalt, Anordnung und Dimensionierung sind. Die Aussparung ist mindestens teilweise, vorzugsweise vollständig, mit einem Trägermaterial gefüllt, das die räumliche Struktur der Aussparung während des Verfahrens zur Herstellung des Metallbauteils wahrt. Hierbei ist das Trägermaterial ein metallisches Trägermaterial und/oder ein keramisches Trägermaterial ist, wobei das metallische Trägermaterial ausgewählt ist aus: Magnesium, Aluminium, Zink, Antimon, Mischungen oder Legierungen daraus.

Als Heizvorrichtung kann hierbei jegliche Heizvorrichtung verwendet werden, die eingerichtet ist, das Metallbauteil nebst Trägermaterial aufzunehmen und auf eine Temperatur zu bringen, die geeignet ist, das Trägermaterial mindestens teilweise in den gasförmigen Zustand zu überführen. Besonders geeignet ist hierbei ein regelbarer Ofen.

In einem sich an das Verbringen bzw. Einbringen des Metallbauteils nebst Trägermaterial in die Heizvorrichtung anschließenden Schritt, erfolgt ein Entfernen mindestens eines Teils des Trägermaterials unter Freilegung mindestens eines Bereichs der Aussparung. Erfindungsgemäß wird hierzu mindestens ein Teil des Trägermaterials in die Gasphase überführt und in einem Kondensationsbereich, dessen Temperatur der Solidustemperatur des Trägermaterials entspricht oder darunterliegt, wieder kondensiert. Diese Verfahrensführung kann durch nachfolgende Reaktionsgleichungen (Reaktionsgleichgewichte) dargestellt werden, wobei ein erstes Reaktionsgleichgewicht mit a und ein zweites Reaktionsgleichgewicht mit b beziffert ist:

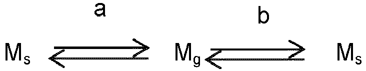

Hieraus ist zu erkennen, dass das Trägermaterial, kurz "M", in einem Gleichgewicht vorliegt, nämlich zwischen seiner festen Form, "Mₛ" und seiner gasförmigen Form "M_{g}". Das erste Reaktionsgleichgewicht a zwischen Mₛ und M_{g} liegt dabei in einem warmen Bereich der Heizvorrichtung vor, so dass das Trägermaterial mindestens teilweise von seinem festen Zustand in den gasförmigen Zustand übergeht. Dies kann durch einfaches Verdampfen unter Bildung einer flüssigen Zwischenphase erfolgen, oder aber durch Sublimation des Trägermaterials. Eine Sublimationsreaktion ist hierbei besonders von Vorteil, da damit eine meist volumenreichere Flüssigphase umgangen wird, die zu Schäden im umliegenden Metallbauteil führen könnte.

Sobald das Trägermaterial im gasförmigen Zustand vorliegt, verteilt es sich durch Diffusion in der Heizvorrichtung. Es wird also aus der Aussparung entfernt, wodurch die Aussparung mindestens teilweise freigelegt wird. Durch anschließende Kondensation des gasförmigen Trägermaterials durch das zweite Reaktionsgleichgewicht b wird dem ersten Reaktionsgleichgewicht das Produkt, nämlich M_{g}, entzogen, so dass das Gleichgewicht auf die Seite von M_{g} verschoben wird. Es wird somit weiteres Trägermaterial in die Gasphase überführt, um das erste Reaktionsgleichgewicht wieder herzustellen, dem durch Kondensation weiterhin Trägermaterial entzogen wird.

Die zweite Reaktion, also die Kondensation des gasförmigen Trägermaterials, die ebenfalls als Gleichgewichtsreaktion vorliegt, erfolgt durch Kondensieren des gasförmigen Trägermaterials in einem Kondensationsbereich. Der Kondensationsbereich weist eine Temperatur auf, die der Solidustemperatur des Trägermaterials entspricht oder darunterliegt. Je niedriger die Temperatur des Kondensationsbereichs ist, desto schneller erfolgt die Kondensationsreaktion und desto schneller und effizienter wird dem zweiten Reaktionsgleichgewicht gasförmiges Trägermaterial unter Überführung desselben erneut in den festen Zustand, entzogen, was wiederum das Entfernen von weiterem gasförmigen Trägermaterial aus der Aussparung (erstes Reaktionsgleichgewicht) beschleunigt und unterhält.

Somit wird nach und nach ohne die Zugabe von Chemikalien und damit auf eine sehr wenig aufwendige, sichere, ökonomische und effiziente Art und Weise Trägermaterial aus der Aussparung entfernt und die Aussparung damit mindestens teilweise freigelegt.

Diese Reaktionen des Überführens des Trägermaterials in die Gasphase und des Kondensierens des gasförmigen Trägermaterials in einem Kondensationsbereich, der außerhalb des Metallbauteils liegt, kann solange durchgeführt werden, bis die Aussparung vollständig freigelegt ist. Für eine zeitliche Straffung des Verfahrens ist es jedoch vorteilhaft, dass nur ein Teil des Trägermaterials durch den oben dargestellten Prozess aus der Aussparung entfernt wird, und Restbestandteile an Trägermaterial beispielsweise durch Ausspülen oder Ausblasen entfernt werden.

Das Metallbauteil ist vorzugsweise als Stahlbauteil ausgebildet, da hierdurch dem Metallbauteil sehr gute mechanische Eigenschaften verliehen werden.

Gemäß einer vorteilhaften Weiterbildung liegt der Kondensationsbereich außerhalb der Heizvorrichtung. Dies hat den Vorteil, dass das rekondensierte Trägermaterial direkt aus der Heizvorrichtung entfernt wird und somit sowohl die Anordnung der Heizvorrichtung als auch die Verfahrensführung einfach und gut handhabbar sind.

Gemäß einer alternativen Weiterbildung liegt der Kondensationsbereich innerhalb der Heizvorrichtung. Dies ist beispielsweise durch Verwendung eines Zweizonenofens möglich.

Hierdurch kann die Heizvorrichtung kompakter und damit platzsparender ausgebildet werden.

Da die meisten Metallbauteile zur Verbesserung der Struktur, der Oberfläche und/oder der mechanischen Eigenschaften einer Wärmebehandlung zugeführt werden, kann die Verfahrensführung vorteilhaft dadurch gestrafft werden, dass das Überführen mindestens eines Teils des Trägermaterials in die Gasphase bei einer Temperatur durchgeführt wird, die gleichzeitig eine Veredelung des Metallbauteils bewirkt. Die Veredelung kann je nach für das Metallbauteil verwendetem Metall oder Legierung bei unterschiedlichen Temperaturen ausgeführt werden. Geeignete Veredelungsschritte sind z.B. ein Härten, ein Lösungsglühen, ein Anlassen oder ein Sintern des Metallbauteils. Die geeignete Temperatur kann durch einfache Versuche herausgefunden werden. Durch diese Verfahrensführung wird das Metallbauteil während des Entfernens des Trägermaterials vergütet bzw. veredelt, was Zeit und auch Kosten für die Verfahrensführung spart.

Ferner vorteilhaft umfasst das Verfahren einen Schritt des Anlegens eines Unterdrucks an die Heizvorrichtung. Durch den Unterdruck wird das gasförmige Trägermaterial schneller aus dem Reaktionsgleichgewicht entfernt. Zudem wirkt der angelegte Unterdruck als Isolator und reduziert den Wärmeverlust durch den Kondensationsbereich, was insbesondere von Vorteil ist, wenn der Kondensationsbereich in der Heizvorrichtung liegt.

Alternativ oder additiv kann das Verfahren zur schnelleren Entfernung von gasförmigem Trägermaterial einen Schritt des Zuführens eines Gases in die Heizvorrichtung umfassen. Hierdurch wird das gasförmige Trägermaterial quasi aus der Aussparung ausgetrieben. Zudem wird der Gasraum mit zusätzlich zugeführtem Gas gefüllt, so dass der Abtransport von gasförmigem Trägermaterial durch erhöhte Konvektion gefördert wird.

Das zugeführte Gas ist insbesondere ein Inertgas, wie z.B. Stickstoff oder Helium, also ein Gas, das weder mit dem Trägermaterial noch mit dem Metall bei der in der Heizvorrichtung vorherrschenden Temperatur eine Reaktion eingeht. Das zugeführte Gas kann aber auch ein Formiergas, Reaktionsgas oder eine Mischung aus den vorstehend genannten Gasen sein. Durch geeignete Wahl des Gases kann das Austreiben des gasförmigen Trägermaterials deutlich beschleunigt werden, so dass die Aussparung innerhalb kurzer Zeit freigelegt wird.

Gemäß einer weiteren vorteilhaften Weiterbildung ist vorgesehen, dass das Kondensieren des gasförmigen Trägermaterials an einem Kühlfinger erfolgt. Kühlfinger sind platzsparende Vorrichtungen, die innerhalb oder außerhalb der Heizvorrichtung angeordnet sein können und einen Kondensationsbereich für das gasförmige Trägermaterial darstellen. Sie sind kostengünstig und flexibel anordenbar. Auch ist ihre Temperatur und damit die Kondensationsrate an gasförmigem Trägermaterial sehr einfach steuerbar.

Gemäß einer alternativen Ausführungsform erfolgt das Kondensieren des gasförmigen Trägermaterials in einer Kühlfalle. Die Kühlfalle ist in der Regel außerhalb der Heizvorrichtung angeordnet. Sie bietet den Vorteil, dass das rekondensierte Trägermaterial lokal sehr einfach aufgefangen werden kann und die Menge an sich bildendem wieder verfestigtem Trägermaterial gut verfolgbar ist. Diese Ausführungsform eignet sich insbesondere bei gleichzeitiger Anwendung von Unterdruck oder bei einem Zuführen eines Gases zum Austreiben des gasförmigen Trägermaterials.

Weiter vorteilhaft wird die Kühlfalle einer Vakuumpumpe vorgeschaltet, da dadurch eine bessere Abscheidung des gasförmigen Trägermaterials gewährleistet werden kann.

Zur Verbesserung des Abtransports des Trägermaterials ist weiter vorteilhaft vorgesehen, dass die Kühlfalle einem aus der Heizvorrichtung austretenden Gasstrom nachgeschaltet wird.

Bei dem Trägermaterial handelt es sich um ein metallisches Trägermaterial, da metallische Trägermaterialien bei relativ niedrigen Temperaturen sehr gut steuerbar in die Gasphase übergehen und kontrolliert rekondensiert werden können. Das metallische Trägermaterial ist dabei ausgewählt aus: Magnesium, Aluminium, Zink, Antimon, Mischungen oder Legierungen daraus. Diese Materialien sind zu moderaten Preisen erhältlich und einfach verarbeitbar. Alternativ oder additiv kann das Trägermaterial ein keramisches Trägermaterial enthalten. Dieses dient insbesondere bei Verwendung in Kombination mit einem metallischen Trägermaterial der Durchsetzung der Struktur. Sobald ein Teil des metallischen Trägermaterials entfernt ist, kann die Reststruktur sehr leicht durch mechanische Einwirkung, beispielsweise durch Ausblasen oder Ausspülen vollständig unter Freilegung der Aussparung entfernt werden.

Weitere Einzelheiten, Vorteile und Merkmale der vorliegenden Erfindung ergeben sich aus nachfolgender Beschreibung von Ausführungsbeispielen anhand der Zeichnung. Es zeigt:
Fig. 1 ein Schema veranschaulichend Verfahrensschritte zur Herstellung eines Metallbauteils mit einer Aussparung gemäß einer Ausführungsform,
Fig. 2 eine schematische Ansicht einer Vorrichtung zur Durchführung des Verfahrens gemäß einer ersten Ausführungsform und
Fig. 3 eine schematische Ansicht einer Vorrichtung zur Durchführung des Verfahrens gemäß einer zweiten Ausführungsform.

In den Figuren sind nur die wesentlichen Merkmale der Erfindung dargestellt. Alle übrigen Merkmale sind der Übersichtlichkeit halber weggelassen. Ferner beziffern gleiche Bezugszeichen gleiche Bauteile bzw. Komponenten.

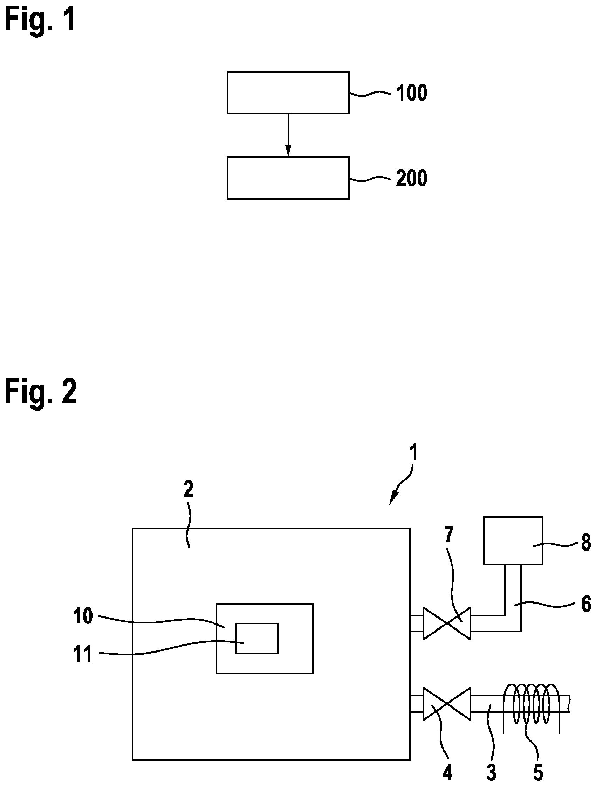

Im Detail zeigt Figur 1 schematisiert Verfahrensschritte eines Verfahrens zur Herstellung eines Metallbauteils mit mindestens einer Aussparung. Das Metallbauteil kann vorteilhaft als Stahlbauteil ausgebildet sein.

In einem ersten Verfahrensschritt 100 wird das Metallbauteil in eine Heizvorrichtung eingebracht. Das Metallbauteil umfasst mindestens eine Aussparung, die zumindest teilweise mit einem Trägermaterial gefüllt ist. Bei der Aussparung kann es sich z.B. um eine Ausnehmung, einen Hohlraum, eine Kavität, eine Hinterschneidung oder dergleichen handeln, die im fertigen Metallbauteil beispielsweise als Medium führender Kanal dient.

Die Heizvorrichtung ist insbesondere als Ofen ausgebildet und dient dazu das Metallbauteil nebst dem Trägermaterial auf eine vorgesehene Temperatur zu bringen.

Im Anschluss an das Verbringen des Metallbauteils in die Heizvorrichtung erfolgt ein Entfernen 200 mindestens eines Teils des Trägermaterials unter Freilegung mindestens eines Bereichs der Aussparung.

Hierzu wird mindestens ein Teil des Trägermaterials in die Gasphase überführt, beispielsweise durch Sublimation oder durch ein Durchlaufen einer flüssigen Phase. Durch das Überführen von Trägermaterial in die Gasphase wird Trägermaterial aus der Aussparung entfernt. Es verteilt sich durch Diffusion im umliegenden Raum.

Das gasförmig vorliegende Trägermaterial wird in einem Kondensationsbereich kondensiert. Der Kondensationsbereich kann innerhalb der Heizvorrichtung oder außerhalb der Heizvorrichtung vorliegen und hat eine Temperatur, die der Solidustemperatur des Trägermaterials entspricht oder darunter liegt. Somit rekondensiert das Trägermaterial in diesem relativ kühlen Kondensationsbereich und wird hierdurch aus dem Reaktionsgleichgewicht zwischen festem Trägermaterial im temperierten Bereich der Heizvorrichtung und gasförmigem Trägermaterial ebenfalls im temperierten Bereich der Heizvorrichtung, entfernt. Damit verschiebt sich das vorstehend genannte Gleichgewicht und es wird weiteres festes Trägermaterial aus der Aussparung in die Gasphase überführt, das außerhalb des Metallbauteils rekondensiert, beispielsweise in einer Kühlfalle oder an einem Kühlfinger. Die jeweiligen Temperauren zum Überführen des Trägermaterials in die Gasphase und auch zum Kondensieren desselben, können einfach durch experimentelle Versuche herausgefunden, oder aber entsprechenden Tabellenwerken entnommen werden.

Durch das vorstehend erläuterte Verfahren wird auf einfache und sehr effiziente Weise ein Metallbauteil mit einer Aussparung hergestellt, ohne dass es dem Zufügen von das Trägermaterial auflösenden Chemikalien bedarf. Zur Beschleunigung des Überführens des Trägermaterials in die Gasphase kann es allerdings von Vorteil sein, einen Unterdruck an die Heizvorrichtung anzulegen oder ein Gas durch die Heizvorrichtung zu leiten, durch das das gasförmige Trägermaterial von dem Metallbauteil besonders schnell entfernt wird.

Figur 2 zeigt eine Vorrichtung 1 zur Ausführung eines Verfahrens zur Herstellung eines Metallbauteils mit mindestens einer Aussparung. Das Verfahren kann dabei wie in Figur 1 dargelegt in der Vorrichtung 1 ausgeführt werden.

Die Vorrichtung umfasst einen Ofen 2, in den ein Metallbauteil 10 eingebracht ist. Das Metallbauteil 10 weist ein Trägermaterial 11 auf, das eine Aussparung mindestens teilweise füllt. Nach Beendigung des Verfahrens liegt die Aussparung in dem Metallbauteil frei und kann beispielsweise als ein Medium führender Kanal, z.B. zum Transport eines Kühlmittels, eines Reaktionsprodukts oder von Reaktionsedukten dienen.

An den Ofen 2 ist eine Kühlleitung 3 angeschlossen, die über ein Ventil 4 den Ofen 2 mit einem Kühlfinger 5 verbindet. Der Kühlfinger 5 entspricht einem Kondensationsbereich für die Kondensation des gasförmigen Trägermaterials.

Zudem ist an den Ofen eine Vakuumleitung 6 angeschlossen, die über ein Ventil 7 den Ofen 2 mit einem Vakuumanschluss 8, beispielsweise einer Vakuumpumpe, verbindet.

Der Ofen 2 wird dabei auf einer Temperatur gehalten, bei der das Trägermaterial 11 in die Gasphase übergeht. Es stellt sich im Inneren des Ofens 2 ein Reaktionsgleichgewicht zwischen festem Trägermaterial 11 in der Aussparung und gasförmigem Trägermaterial ein. Durch Öffnen des Ventils 4 wird der Ofen 2 mit dem Kühlfinger 5 verbunden. Somit strömt gasförmiges Trägermaterial an den Kühlfinger 5. Der Kühlfinger 5 wird dabei auf einer Temperatur gehalten, die der Solidustemperatur des Trägermaterials 11 entspricht oder darunter liegt. Dadurch wird das gasförmige Trägermaterial am Kühlfinger 5 kondensiert. Somit wird dem vorstehenden Reaktionsgleichgewicht gasförmiges Trägermaterial entzogen und folglich aus dem festen, in der Aussparung befindlichen Trägermaterial 11, nachgebildet. Somit wird nach und nach festes Trägermaterial 11 aus der Aussparung im Metallbauteil 10 über die Gasphase entfernt und am Kühlfinger 5 rekondensiert. Die Aussparung verarmt an Trägermaterial 11, und wird somit mindestens teilweise freigelegt.

Das Entfernen von gasförmigem Trägermaterial kann durch das Öffnen des Ventils 7 beschleunigt werden, da dadurch ein Unterdruck, und insbesondere ein Vakuum, an den Ofen 2 angelegt werden kann.

Die Vorrichtung ist sehr gut dazu geeignet ein Metallbauteil mit mindestens einer Aussparung herzustellen. Etwaige Restbestände an festem Trägermaterial 11 können beispielsweise durch Anwendung von Druckluft oder einem Wasserstrahl vollständig aus der Aussparung entfernt werden.

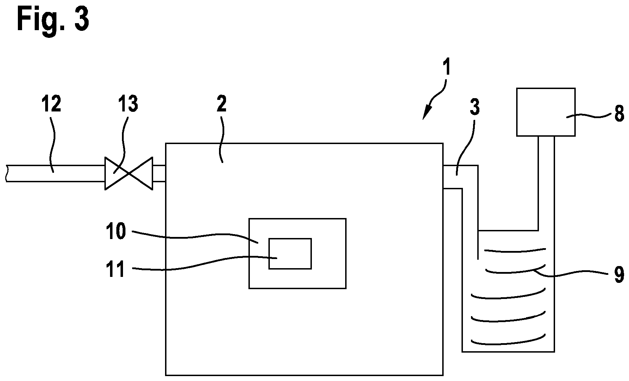

Figur 3 zeigt eine weitere Vorrichtung 1 zur Herstellung eines Metallbauteils mit mindestens einer Aussparung gemäß einer weiteren Ausführungsform.

Als Unterschied zu der Vorrichtung 1 aus Figur 2 ist zu sehen, dass die Kühlleitung 3 eine Kühlfalle 9 umfasst, in der das gasförmige Trägermaterial kondensiert wird. Die Kühlfalle 9 entspricht in dieser Ausführungsform dem Kondensationsbereich für die Kondensation des gasförmigen Trägermaterials. Das Austreiben des gasförmigen Trägermaterials wird dadurch erleichtert, dass durch die Gasleitung 12, nach Öffnen des Ventils 13, ein Gas, beispielsweise ein Inertgas, ein Formiergas, ein Reaktionsgas oder dergleichen, durch den Ofen 2 geleitet wird. Damit wird der Gasraum im Ofen 2 mit dem zugeführten Gas verdünnt und es wird durch das beschleunigte Entfernen des gasförmigen Trägermaterials aus dem Ofen 2 und Kondensation desselben in der Kühlfalle 9 schneller gasförmiges Trägermaterial aus dem in der Aussparung des Metallbauteils 10 vorliegenden festen Trägermaterial 11 nachgebildet.

Auch die in Figur 3 dargestellte Vorrichtung 1 ist dazu geeignet das durch Figur 1 veranschaulichte Verfahren auszuführen und innerhalb kurzer Zeit ohne hohen technischen Aufwand ein Metallbauteil mit einer Aussparung herzustellen.

Neben der vorstehenden schriftlichen Beschreibung der Erfindung wird zu deren ergänzender Offenbarung hiermit explizit auf die zeichnerische Darstellung der Erfindung in den Fig. 1 bis 3 Bezug genommen.

### Bezugszeichenliste

- 1: Vorrichtung
- 2: Ofen
- 3: Kühlleitung
- 4: Ventil
- 5: Kühlfinger
- 6: Vakuumleitung
- 7: Ventil
- 8: Vakuumanschluss
- 9: Kühlfalle
- 10: Metallbauteil
- 11: Trägermaterial
- 12: Gasleitung
- 13: Ventil
- 100-200: Verfahrensschritte

## Patentansprüche

1. Verfahren zur Herstellung eines Metallbauteils (10) mit mindestens einer Aussparung, umfassend die Schritte:
- Einbringen eines Metallbauteils (10) in eine Heizvorrichtung, wobei das Metallbauteil (10) mindestens ein eine Aussparung zumindest teilweise füllendes Trägermaterial (11) umfasst und
- Entfernen mindestens eines Teils des Trägermaterials (11) unter Freilegung mindestens eines Bereichs der Aussparung durch:
Überführen mindestens eines Teils des Trägermaterials (11) in die Gasphase und Kondensieren des gasförmigen Trägermaterials in einem Kondensationsbereich (9), dessen Temperatur der Solidustemperatur des Trägermaterials (11) entspricht oder darunter liegt
wobei das Trägermaterial (11) ein metallisches Trägermaterial und/oder ein keramisches Trägermaterial ist, wobei das metallische Trägermaterial ausgewählt ist aus: Magnesium, Aluminium, Zink, Antimon, Mischungen oder Legierungen daraus.

2. Verfahren nach Anspruch 1, wobei der Kondensationsbereich (9) außerhalb der Heizvorrichtung liegt.

3. Verfahren nach Anspruch 1, wobei der Kondensationsbereich (9) innerhalb der Heizvorrichtung liegt.

4. Verfahren nach einem der Ansprüche 1 bis 3, wobei das Überführen mindestens eines Teils des Trägermaterials (11) in die Gasphase bei einer Temperatur durchgeführt wird, die eine Veredelung des Metallbauteils (10) bewirkt.

5. Verfahren nach einem der vorhergehenden Ansprüche, ferner umfassend einen Schritt des Anlegens eines Unterdrucks an die Heizvorrichtung.

6. Verfahren nach einem der vorhergehenden Ansprüche, ferner umfassend einen Schritt des Zuführens eines Gases in die Heizvorrichtung.

7. Verfahren nach Anspruch 6, wobei das Gas ausgewählt ist aus: Inertgas, Formiergas, Reaktionsgas oder Mischungen daraus.

8. Verfahren nach einem der vorhergehenden Ansprüche, wobei das Kondensieren des gasförmigen Trägermaterials an einem Kühlfinger (5) erfolgt.

9. Verfahren nach einem der Ansprüche 1 bis 7, wobei das Kondensieren des gasförmigen Trägermaterials in einer Kühlfalle (9) erfolgt.

10. Verfahren nach Anspruch 9, wobei die Kühlfalle (9) einer Vakuumpumpe (8) vorgeschaltet wird.

11. Verfahren nach Anspruch 9 oder 10, wobei die Kühlfalle (9) einem aus der Heizvorrichtung austretenden Gasstrom nachgeschaltet wird.

## Claims

1. Method for producing a metal component (10) with at least one recess, comprising the steps:
- introducing a metal component (10) into a heating device, wherein the metal component (10) comprises at least one carrier material (11) at least partially filling a recess; and
- removing at least a part of the carrier material (11), thereby exposing at least a region of the recess by:
transferring at least a part of the carrier material (11) into the gas phase and condensing the gaseous carrier material in a condensation region (9), the temperature of which corresponds to or is below the solidus temperature of the carrier material (11),
wherein the carrier material (11) is a metallic carrier material and/or a ceramic carrier material, wherein the metallic carrier material is selected from:
magnesium, aluminum, zinc, antimony, and mixtures or alloys thereof.

2. Method according to claim 1, wherein the condensation region (9) is outside the heating device.

3. Method according to claim 1, wherein the condensation region (9) is within the heating device.

4. Method according to any of claims 1 to 3, wherein the transfer of at least a part of the carrier material (11) into the gas phase is carried out at a temperature which brings about a refinement of the metal component (10).

5. Method according to any of the preceding claims, further comprising a step of applying a negative pressure to the heating device.

6. Method according to any of the preceding claims, further comprising a step of supplying a gas to the heating device.

7. Method according to claim 6, wherein the gas is selected from:
inert gas, forming gas, reaction gas or mixtures thereof.

8. Method according to any of the preceding claims, wherein the condensation of the gaseous carrier material takes place on a cold finger (5).

9. Method according to any of claims 1 to 7, wherein the condensation of the gaseous carrier material takes place in a cold trap (9).

10. Method according to claim 9, wherein the cold trap (9) is connected upstream of a vacuum pump (8).

11. The method according to either claim 9 or claim 10, wherein the cold trap (9) is connected downstream of a gas stream emerging from the heating device.

## Revendications

1. Procédé de fabrication d'un composant métallique (10) avec au moins un évidement, comprenant les étapes :
- d'introduction d'un composant métallique (10) dans un dispositif de chauffage, dans lequel le composant métallique (10) comporte au moins un matériau porteur (11) remplissant au moins partiellement un évidement et
- de retrait d'au moins une partie du matériau porteur (11) en libérant au moins une zone de l'évidement par :
le transfert d'au moins une partie du matériau porteur (11) dans la phase gazeuse et la condensation du matériau porteur gazeux dans une zone de condensation (9), dont la température correspond à la température de solidus du matériau porteur (11) ou se trouve en dessous,
dans lequel le matériau porteur (11) est un matériau porteur métallique et/ou un matériau porteur céramique, dans lequel le matériau porteur métallique est sélectionné parmi : du magnésium, de l'aluminium, du zinc, de l'antimoine, des mélanges ou alliages de ceux-ci.

2. Procédé selon la revendication 1, dans lequel la zone de condensation (9) se trouve en dehors du dispositif de chauffage.

3. Procédé selon la revendication 1, dans lequel la zone de condensation (9) se trouve à l'intérieur du dispositif de chauffage.

4. Procédé selon l'une des revendications 1 à 3, dans lequel le transfert d'au moins une partie du matériau porteur (11) dans la phase gazeuse est réalisé à une température qui provoque une transformation du composant métallique (10).

5. Procédé selon l'une des revendications précédentes, comprenant en outre une étape d'application d'une dépression au dispositif de chauffage.

6. Procédé selon l'une des revendications précédentes, comprenant en outre une étape d'amenée d'un gaz dans le dispositif de chauffage.

7. Procédé selon la revendication 6, dans lequel le gaz est sélectionné parmi :
un gaz inerte, un gaz de formage, un gaz réactif ou des mélanges de ceux-ci.

8. Procédé selon l'une des revendications précédentes, dans lequel la condensation du matériau porteur gazeux est effectuée au niveau d'un doigt de refroidissement (5).

9. Procédé selon l'une des revendications 1 à 7, dans lequel la condensation du matériau porteur gazeux est effectuée dans un piège cryogénique (9).

10. Procédé selon la revendication 9, dans lequel le piège cryogénique (9) est monté en amont d'une pompe à vide (8).

11. Procédé selon la revendication 9 ou 10, dans lequel le piège cryogénique (9) est monté en aval d'un courant de gaz sortant du dispositif de chauffage.
